# FASCICULE DE BREVET EUROPEEN

(11) **EP 3 641 597 B1**
(45) Date de publication et mention de la délivrance du brevet: **17.11.2021**
(21) Numéro de dépôt: 18735683.7
(22) Date de dépôt: 15.06.2018
(51) Int. Cl.: A47C 31/12, B60R 21/015

(54) **SIÈGE**
SITZ
SEAT

(30) Priorité: 23.06.2017 FR 1755804
(43) Date de publication de la demande: 29.04.2020
(73) Titulaire: Crouzet Automatismes, 26000 Valence (FR)
(72) Inventeur: LAUGT, Dorian, 26100 Romans-sur-Isère (FR); NIGUET, Ludovic, 07130 Toulaud (FR)
(74) Mandataire: Colombo, Michel
(86) Numéro de dépôt international: PCT/FR2018/051434
(87) Numéro de publication internationale: WO 2018/234667

(56) Documents cités:
- WO-A1-2013/178486
- FR-A1- 2 854 363
- JP-A- 2005 287 795

## Description

L'invention concerne un siège. L'invention concerne également un procédé de fabrication de ce siège.

Des sièges connus comportent :
- une matelassure en matériau souple comportant une cavité borgne, cette cavité borgne comportant :
   - une ouverture débouchant sur un côté de la matelassure,
   - un fond situé du côté opposé à l'ouverture, et
   - des parois latérales s'étendant depuis la périphérie du fond jusqu'à la périphérie de l'ouverture,
- un bloc instrumenté en matériau souple reçu à l'intérieur de la cavité, ce bloc instrumenté comportant :
   - une face intérieure tournée vers le fond de la cavité,
   - une face extérieure située du côté opposé à la face intérieure et directement exposée à l'extérieur de la matelassure,
   - des faces latérales qui s'étendent depuis la périphérie de la face intérieure jusqu'à la périphérie de la face extérieure, ces faces latérales étant conformées pour maintenir le bloc instrumenté coincé à l'intérieur de la cavité par coopération de forme avec les parois latérales de la cavité,
   - un dispositif électrique.

Une assise d'un tel siège est par exemple décrite dans la demande JP2005287795. Dans cette demande, le bloc instrumenté est un bloc de mousse sur la face intérieure duquel est collé le dispositif électrique. Plus précisément, le dispositif électrique est un dispositif apte à détecter la présence d'un usager assis sur l'assise. Ainsi, après introduction de ce bloc instrumenté à l'intérieur de la cavité de la matelassure, le dispositif électrique est coincé à l'intérieur de l'assise. Plus précisément, le dispositif électrique est coincé entre le fond de la cavité et la face intérieure du bloc instrumenté.

Une telle assise présente de nombreux avantages. Par exemple, le dispositif électrique peut facilement être situé à une profondeur quelconque sous la face supérieure de l'assise. Il est alors possible de le placer à une profondeur telle que l'usager assis sur cette assise ne ressent pas la présence de ce dispositif électrique. Cela permet donc de conserver le confort de l'assise inchangé.

Les moyens de montage de cette assise sont identiques à ceux d'une assise dépourvue de dispositif électrique. En effet, le dispositif électrique est entièrement situé à l'intérieur de l'assise à l'exception, éventuellement, de fils de raccordement électrique de ce dispositif électrique à une unité électronique de traitement.

Le montage et, éventuellement le démontage, du dispositif électrique est simple car il peut être réalisé sans outil. En effet, insérer un bloc en matériau souple à l'intérieur d'une cavité peut facilement être réalisé à la main par un opérateur. Le montage et le démontage sont également simplifiés par le fait que le bloc en matériau souple est maintenu à l'intérieur de la cavité par simple coopération de forme avec les parois latérales de cette cavité.

Il n'est pas toujours nécessaire de prévoir des moyens complémentaires de fixation du bloc instrumenté à l'intérieur de la cavité.

Enfin, le fait que le dispositif électrique soit déjà solidaire du bloc en matériau souple permet de fixer le bloc en matériau souple et le dispositif électrique à l'intérieur de la matelassure en une seule et même opération.

Toutefois, il est souhaitable d'améliorer un tel siège en particulier pour en simplifier encore plus la fabrication.

De l'état de la technique est également connu de :
- WO2013/178486A1, et
- FR2854363A1.

L'invention a donc pour objet un tel siègeconforme à la revendication 1.

Dans le siège revendiqué, le dispositif électrique est reçu à l'intérieur d'un logement qui s'étend vers l'intérieur du bloc en matériau souple. Dès lors, le dispositif électrique est retenu à l'intérieur du bloc en matériau souple par les flancs latéraux de ce logement. Il n'est donc plus nécessaire de coller le dispositif électrique sur la face intérieure du bloc instrumenté. Cela simplifie donc le procédé de fabrication de l'assise. De plus, le siège revendiqué préserve les avantages décrits dans le cas de l'assise de la demande JP2005287795, notamment en termes de simplicité de montage et de démontage du dispositif électrique à l'intérieur de la matelassure.

Dans le siège revendiqué, le dispositif électrique est inséré doublement dans des logements en mousse. Plus précisément, il est inséré une fois à l'intérieur du logement du bloc instrumenté et une fois à l'intérieur de la cavité de la matelassure. Grâce à cela, les éventuelles nuisances sonores du dispositif électrique qui pourraient intervenir lors de son fonctionnement sont limitées.

Les modes de réalisation de ce siège peuvent comporter une ou plusieurs des caractéristiques des revendications dépendantes.

L'invention concerne également un procédé de fabrication du siège revendiqué conforme à la revendication 10.

L'invention sera mieux comprise à la lecture de la description qui va suivre, donnée uniquement à titre d'exemple non limitatif et faite en se référant aux dessins sur lesquels :
- la figure 1 est une illustration schématique partielle, en coupe verticale, d'un véhicule automobile comportant un siège ;
- la figure 2 est une illustration, en vue de dessus, de l'assise du siège arrière du véhicule de la figure 1 ;
- la figure 3 est une illustration en perspective d'un dispositif électrique de détection logé dans l'assise de la figure 2 ;
- la figure 4 est une illustration, en perspective et en coupe verticale, de l'assise de la figure 2 ;
- la figure 5 est une illustration, en perspective et en coupe verticale, d'une matelassure de l'assise de la figure 2;
- la figure 6 est une illustration, en perspective, d'un bloc instrumenté de l'assise de la figure 2;
- la figure 7 est un organigramme d'un procédé de fabrication de l'assise de la figure 2.

Dans ces figures, les mêmes références sont utilisées pour désigner les mêmes éléments. Dans la suite de cette description, les caractéristiques et fonctions bien connues de l'homme du métier ne sont pas décrites en détail.

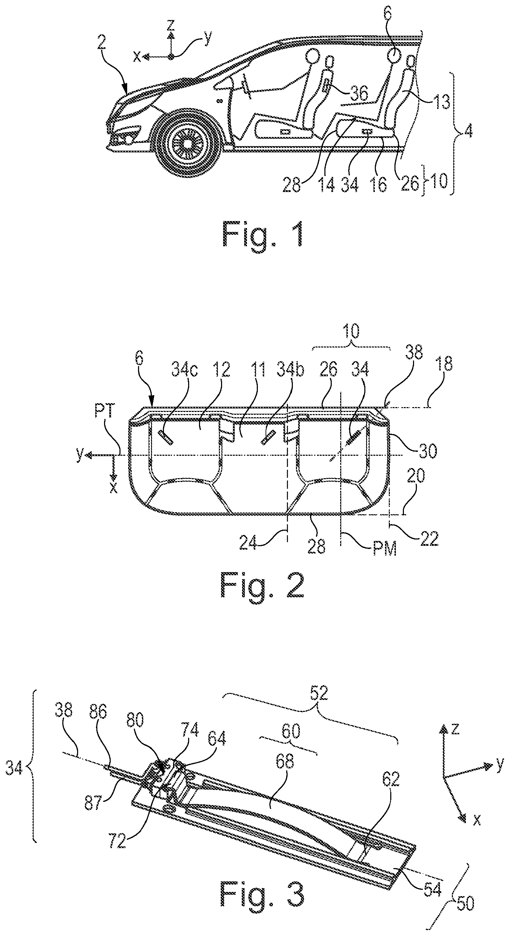

La figure 1 représente un véhicule automobile 2 équipé d'un siège 4 sur lequel est assis un usager 6. Sur la figure 1, l'usager 6 est un passager arrière du véhicule 2 et le siège 4 est une banquette arrière de ce véhicule 2. Toutefois, tout ce qui est décrit par la suite s'applique à n'importe quel autre siège et, en particulier, aux autres sièges d'un véhicule automobile.

Le siège 4 va maintenant être décrit plus en détail en référence aux figures 1 et 2. Le siège 4 comporte trois assises 10, 11 et 12 (figure 2) disposées les unes à côté des autres dans une direction Y horizontale d'un repère orthogonal XYZ. Le siège 4 comporte également un dossier 13 (figure 1). Dans ces figures 1 et 2 comme dans les figures suivantes, l'horizontal est repéré par des directions X et Y du repère XYZ. La direction X est ici parallèle à la direction longitudinale du véhicule 2, c'est-à-dire la direction dans laquelle le véhicule 2 avance en ligne droite. La direction Z est la direction verticale. Par la suite, les termes tels que « supérieur », « inférieur », « haut », « bas », « au-dessus », et « au-dessous » sont définis par rapport à la direction Z.

Ici, on appelle « assise » l'emplacement du siège 4 destiné à recevoir le postérieur d'un seul usager. Par la suite, seule l'assise 10 est décrite en détail sachant que l'enseignement donné dans ce cas particulier s'applique également à toute autre assise de ce siège.

L'assise 10 comporte une face supérieure 14 (figure 1) sur laquelle repose directement le postérieur de l'usager 6 et une face inférieure 16 située du côté opposé. Les faces 14 et 16 s'étendent principalement parallèlement à un plan horizontal, appelé « plan de l'assise ».

La projection orthogonale de l'assise 10 dans le plan de l'assise est située à l'intérieur d'un rectangle. Ce rectangle est le rectangle de plus petite surface qui contient entièrement cette projection orthogonale. Ce rectangle présente :
- un côté arrière 18,
- un côté avant 20, et
- deux côtés latéraux 22 et 24 (figure 2).

Les côtés 18 et 20 sont parallèles à la direction Y. Ils passent, respectivement, par un bord arrière 26 et un bord avant 28 de l'assise 10. Le bord arrière 26 est celui qui est le plus proche du dossier 13. Ce bord est généralement relié à ce dossier 13. Le bord avant 28 est situé du côté opposé au bord 26 dans la direction X. Les côtés 18 et 20 sont les symétriques l'un de l'autre par rapport à un plan vertical transversal PT.

Les côtés latéraux 22 et 24 sont situés de part et d'autre de l'emplacement où s'assoit l'usager 6. Ils sont symétriques l'un de l'autre par rapport à un plan vertical médian PM de l'assise 10. Dans le cas représenté ici où l'assise 10 est l'assise la plus à droite du siège 4, le côté latéral 22 se situe au niveau d'un bord latéral droit 30 de l'assise 10.

Dans le cas d'une banquette, le côté latéral 24 ne correspond pas à un bord de l'assise. Par contre, le côté latéral 24 est confondu avec le côté latéral droit de l'assise centrale 11 du siège 4. Ainsi, dans le cas où l'assise considérée est l'assise centrale 11 d'une banquette, aucun des côtés latéraux ne correspond à un bord du siège 4.

Les plans PT et PM se coupent le long d'un axe qui passe par le centre du rectangle. Ils découpent aussi ce rectangle qui entoure l'assise 10 en quatre quarts identiques.

Il est utile de détecter la présence d'un usager assis sur l'assise 10 pour commander en fonction de cette information un ou plusieurs appareils électroniques du véhicule 2. À cet effet, l'assise 10 comporte un dispositif électrique 34 de détection de la force d'appui exercée par le poids de l'usager 6 lorsqu'il est assis sur l'assise 10. La force d'appui s'exerce principalement verticalement du haut vers le bas.

À titre d'illustration, le dispositif 34 est utilisé ici pour commander le déclenchement du gonflement d'un airbag 36 (figure 1) également parfois appelé « coussin gonflable ». Par exemple, l'airbag 36 est logé dans une paroi latérale ou dans un tableau de bord du véhicule 2. Ainsi, lorsque le dispositif 34 détecte l'absence d'une force d'appui suffisante, le déclenchement de l'airbag 36 est par exemple inhibé.

Typiquement, pour ne pas inhiber accidentellement le déclenchement de l'airbag 36 ou au contraire ne pas autoriser accidentellement le déclenchement de cet airbag 36, il faut que le dispositif 34 respecte les contraintes suivantes :
- détecter la présence d'un usager de plus de 29 kg assis sur l'assise 10,
- détecter la présence d'un enfant assis sur un siège enfant qui lui-même repose sur l'assise 10 lorsque le poids du siège enfant et de l'enfant est supérieur à 15 kg,
- ne pas détecter un objet, dont le poids est inférieur à 5 kg, déposé sur l'assise 10, et
- ne pas détecter un enfant assis dans un siège enfant fixé sur l'assise 10 par un mécanisme d'ancrage conforme à la norme ISOFIX (norme ISO 13216-1 : 1999) ou conforme à la norme américaine LATCH (« Lower Anchors and Tethers for Children »).

Pour cela, le dispositif 34 est un dispositif comportant une face longiligne 68 (figure 3) sensible à la force d'appui. Cette face 68 s'étend principalement le long d'un axe horizontal 38.

Pour respecter les contraintes énoncées ci-dessus, de préférence, le dispositif 34 est disposé dans l'un des deux quarts arrières du rectangle délimité par les côtés 18, 20, 22 et 24. Ici, le dispositif 34 est disposé à l'intérieur du quart arrière droit. Pour une description détaillée du positionnement du dispositif 34 à l'intérieur de ce quart arrière droit, le lecteur est renvoyé à la demande de brevet déposée en France le 6 juillet 2016 sous le numéro FR1656499 par le déposant.

Sur la figure 2, des dispositifs de détection 34b et 34c, logés à l'intérieur, respectivement, des assises 11 et 12 sont visibles. Leur positionnement à l'intérieur de leur assise respective se déduit des explications précédentes.

La figure 3 représente un mode de réalisation possible du dispositif 34. Ici, le dispositif 34 est l'un de ceux décrits dans la demande FR1656499 précédemment citée. Ainsi, pour une description détaillée de ce dispositif, le lecteur est renvoyé à cette demande de brevet. On rappellera simplement que le dispositif 34 comporte :
- un support rigide 50 qui s'étend principalement dans un plan horizontal, et
- un ressort à lame 52.

Le support 50 comporte une plaque plane horizontale 54 rigide en traction et en flexion. Cette plaque est réalisée dans un matériau dur comme un métal tel qu'un acier ou un plastique dur. Par « matériau dur » on désigne dans cette description un matériau dont le module de Young à 25°C est supérieur à 1 GPa et, de préférence, supérieur à 10 GPa ou 50 GPa ou 100 GPa.

Dans ce mode de réalisation, le ressort 52 comporte une seule lame 60 qui s'étend, principalement le long de l'axe 38, depuis une extrémité proximale 62 jusqu'à une extrémité distale 64. L'extrémité proximale 62 est montée, sans aucun degré de liberté, sur le support 50. À l'inverse, l'extrémité 64 se déplace par rapport au support 50. Ici, la lame 60 ne forme qu'un seul bloc continu de matière avec le support 50.

Entre les extrémités 62, 64, la lame 60 est cintrée et présente une face d'appui convexe 68 sur laquelle s'exerce directement la force d'appui à détecter. À cet effet, la largeur de la face 68 est supérieure à 0,8 cm ou 1 cm et généralement inférieure ou égale à 3 cm. Pour présenter une sensibilité accrue dans la direction de l'axe 38, la longueur L de la lame 60 entre ses extrémités 62 et 64 est supérieure à 6 cm ou 8 cm, c'est-à-dire typiquement au moins deux ou trois fois supérieure à la largeur de cette même lame. La longueur L est également généralement inférieure à 16 cm ou 12 cm.

Le ressort 52 est déformable, par déformation élastique de la lame 60, entre une conformation cintrée représentée sur la figure 3 et une conformation plus aplatie. La conformation cintrée correspond à la conformation initiale de la lame 60, c'est-à-dire sa conformation en absence de force d'appui sur la face 14.

Le dispositif 34 comporte aussi un mécanisme 72 de guidage en translation de l'extrémité 64 le long de l'axe 38. Plus précisément, ce mécanisme 72 empêche que la force verticale d'appui qui s'exerce directement sur la face 68 de la lame 60 fasse pivoter l'extrémité 64 autour d'un axe de rotation horizontale et perpendiculaire à l'axe 38 et passant par l'extrémité 62. Dans ces conditions, à cause du mécanisme 72, la lame 60 convertit, à l'aide d'une seule pièce, la force d'appui verticale en un déplacement horizontal en translation de l'extrémité 64 le long de l'axe 38.

Un capteur 80 détecte si le déplacement de l'extrémité 64 franchit un seuil prédéterminé S₁. Par exemple, le capteur 80 comporte un bouton poussoir. Ce capteur commute d'un état non-passant vers un état passant dès que le bouton poussoir est enfoncé par l'extrémité 64. Par exemple, dans l'état non-passant, le capteur 80 présente une résistance R_{off} entre les fils 86 et 87. Lorsque la force d'appui déforme la lame 60, l'extrémité 64 avance le long de l'axe 38 et finit par enfoncer le bouton poussoir. En réponse, le capteur 80 commute vers son état passant et présente une résistance Rₒₙ entre les fils 86 et 87. Un tel changement de résistivité indique à l'électronique embarquée du véhicule 2 que l'usager 6 est assis sur l'assise 10. En réponse, l'électronique embarquée autorise le déclenchement de l'airbag 36 en cas d'accident. Lorsque l'usager 6 quitte le siège 4, la force d'appui disparaît. En réponse, la lame 60 revient automatiquement dans sa conformation cintrée et l'extrémité 64 s'éloigne à nouveau du bouton poussoir. Le capteur 80 revient donc automatiquement dans son état non-passant.

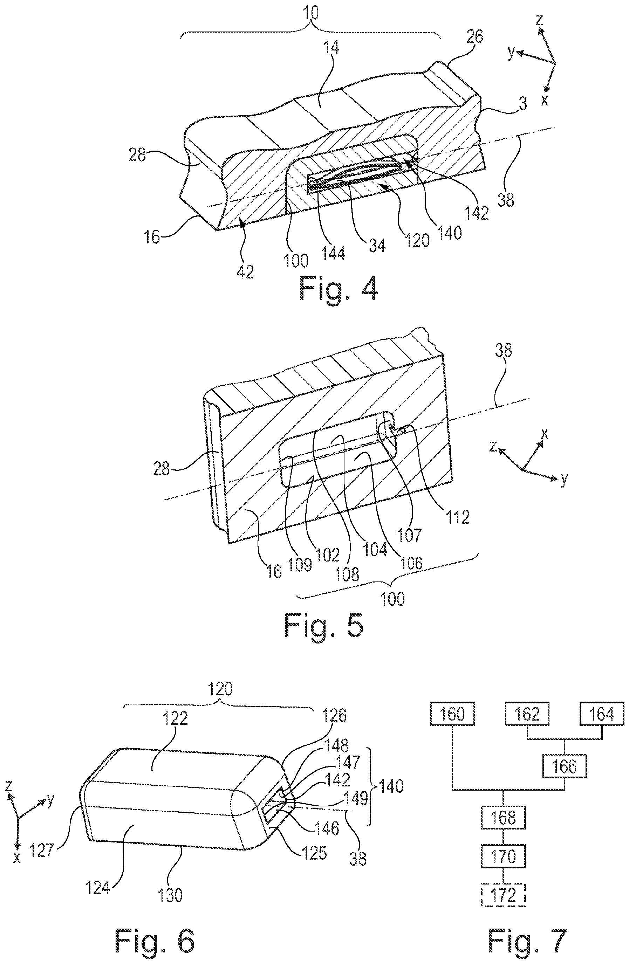

La figure 4 représente une vue partielle en coupe verticale de l'assise 10 le long de l'axe 38. L'assise 10 comporte une matelassure 42 entièrement réalisée dans un matériau souple. Dans cette description, par « matériau souple », on désigne tout matériau dont la dureté est inférieure à 8 kPa et, généralement, supérieure à 1 kPa. La dureté en kPa correspond à la pression qu'il faut exercer sur une face du matériau souple pour obtenir un enfoncement de 40 % de ce matériau. Un enfoncement de 40 % correspond à 40 % de l'enfoncement maximal qui peut être obtenu sans déformation irréversible du matériau souple. Par exemple, l'enfoncement maximal est exprimé par une distance Eₘₐₓ parcourue par la face sur laquelle s'exerce la pression entre la position de repos à la pression atmosphérique et la position d'enfoncement maximale. La position d'enfoncement maximale correspond à la position de cette face lorsqu'elle est soumise à la pression maximale qui ne provoque pas de déformation irréversible du matériau. L'enfoncement de 40 % correspond alors à une distance parcourue par cette face égale à 0,4Eₘₐₓ. Dans le cas du matériau souple de la matelassure 42, sa dureté est le plus souvent comprise dans l'une des plages suivantes : [1 kPa ; 3kPa] ou [3kPa ; 4,5 kPa] ou [4,5 kPa ; 6 kPa] ou [6kPa ; 8 kPa]. La densité des matériaux souples décrits ici est souvent comprise entre 30 kg/m³ et 80 kg/m³.

Typiquement, la matelassure 42 est réalisée en mousse et, généralement, en mousse expansive. Par « mousse expansive », on désigne une mousse qui est obtenue par expansion d'un liquide ou d'un solide. Par exemple, il peut s'agir de mousse polyuréthane.

Les bords et la face supérieure de la matelassure 42 sont généralement recouverts d'un revêtement tel que du cuir véritable ou artificiel ou encore d'un tissu. Sur les figures, ce revêtement n'a pas été représenté. De plus, dans ces figures et dans la suite de la description, les mêmes références 14, 16, 26 et 28 sont utilisées pour désigner les faces supérieure, inférieure et les bords avant et arrière de l'assise 10 et de la matelassure 42. En effet, ces faces et ces bords sont pratiquement confondus puisqu'ils ne sont séparés l'un de l'autre, au plus, que par l'épaisseur du revêtement.

Pour fixer le dispositif 34 à l'intérieur de l'assise 10, la matelassure 42 comporte une cavité 100 aménagée dans sa face inférieure 16. Cette cavité 100 est représentée plus en détail sur la figure 5. La cavité 100 comporte :
- une ouverture 102 qui débouche dans la face 16,
- un fond horizontal 104 situé à l'intérieur de la matelassure 42,
- des parois latérales 106 à 109 qui relient la périphérie du fond 104 à la périphérie de l'ouverture 102.

Le fond 104 est situé à au moins 1 cm ou 2 cm sous la face supérieure 14 de la matelassure 42. Ici, le fond 104 est situé entre 2,5 cm et 4 cm sous la face 14. Grâce à cela, la présence du dispositif 34 à l'intérieur de la matelassure 42 ne peut pas être ressentie par l'usager lorsqu'il s'assoit sur l'assise 10.

Dans cet exemple de réalisation, la cavité 100 est essentiellement parallélépipédique. Par exemple, les parois 106 à 109 s'étendent verticalement vers l'intérieur de la matelassure 4 à partir de la périphérie de l'ouverture 102. Ici, les parois 106 et 108 correspondent aux plus grandes faces verticales de ce parallélépipède et les parois 107 et 109 correspondent aux plus petites faces verticales de ce parallélépipède. Les parois 106 et 108 s'étendent chacune principalement dans un plan vertical parallèle à l'axe 38. Les parois 107 et 109 s'étendent chacune principalement dans un plan vertical perpendiculaire à l'axe 38. Dans cet exemple de réalisation, une encoche 112 est creusée dans la paroi 107 pour guider les fils 86 et 87 du dispositif 34 vers l'extérieur de l'assise 10.

L'assise 10 comporte aussi un bloc instrumenté 120. Le bloc 120 est représenté plus en détail sur la figure 6. Par exemple, à l'exception du dispositif 34, le bloc 120 est entièrement réalisé dans le même matériau souple que celui utilisé pour réaliser la matelassure 42.

Le bloc 120 comporte une face intérieure 122 destinée à être maintenue en appui directement contre le fond 104 de la cavité 100. Pour cela, le bloc 120 est retenu à l'intérieur de la cavité 100 par coopération de forme entre ses faces latérales 124 à 127 et les parois latérales 106 à 109. À cet effet, la forme du bloc 120 est identique à la forme de la cavité 100 ou légèrement supérieure à la forme de la cavité 100. Par « légèrement supérieure », on désigne le fait que le bloc 120 comporte au moins une section horizontale qui est plus large et/ou plus longue que la section horizontale correspondante de la cavité 100. De plus, les dimensions du bloc 120 sont telles qu'il peut être introduit à la main et sans outil, par un être humain, à l'intérieur de la cavité 100 jusqu'à ce que la face intérieure 122 entre en contact avec le fond 104. Lorsque la face intérieure 122 est maintenue en contact avec le fond 104, on dit que le bloc 120 est dans sa position enfoncée.

Le fait qu'au moins une section horizontale du bloc 120 ait des dimensions supérieures ou égales aux dimensions de la section horizontale correspondante de la cavité 100 permet de retenir, par frottement mécanique, entre les faces 124 à 127 et les parois 106 à 109, le bloc 120 dans sa position enfoncée.

Ici, le bloc 120 a donc une forme essentiellement parallélépipédique. Les faces 124 et 126 correspondent aux plus grandes faces verticales de ce parallélépipède et sont parallèles à l'axe 38 dans la position enfoncée. Les faces 125 et 127 correspondent aux plus petites faces verticales de ce parallélépipède et sont pratiquement perpendiculaires à l'axe 38 dans la position enfoncée.

Dans ce mode de réalisation, pour faciliter l'introduction du bloc 120 à l'intérieur de la cavité 100, les arêtes situées à l'intersection de la face 122 avec les faces latérales 124 à 127 sont arrondies. Par exemple, elles présentent un rayon de courbure supérieur à 1 mm ou 5 mm. Éventuellement, pour faciliter encore plus l'introduction du bloc 120 à l'intérieur de la cavité 100, les faces 124 à 127 sont légèrement inclinées vers l'intérieur du bloc 120. Par exemple, l'inclinaison des faces 124 à 127 est telle qu'elle forme un angle, avec la direction Z, compris entre 1° et 20° et, de préférence, compris entre 4° et 10°.

Le bloc 120 comporte aussi une face extérieure 130 située du côté opposé à la face 122. Ici, le bloc 120 est conformé pour que, dans la position enfoncée, la face 130 affleure la face 16 de la matelassure 42.

L'épaisseur, dans la direction Z, du bloc 120 est typiquement comprise entre 3 cm et 15 cm. La longueur du bloc 120, le long de l'axe 38, est par exemple comprise entre 8 cm et 25 cm. La largeur du bloc 120, dans la direction perpendiculaire à l'axe 38, est par exemple comprise entre 5 cm et 25 cm.

Le bloc 120 comporte un logement oblong horizontal 140 à l'intérieur duquel est reçu le dispositif 34. Ce logement 140 est ici un logement borgne qui s'étend le long de l'axe 38 depuis une entrée 142 jusqu'à un fond borgne 144 (figure 4) situé à l'intérieur du bloc 120 et du côté opposé à l'entrée 142. La longueur du logement 140 le long de l'axe 38 est supérieure ou égale à la longueur du dispositif 34 le long du même axe. Ainsi, le dispositif 34 peut être entièrement logé à l'intérieur du logement 140 sans dépasser de la face 125.

Ici, le logement 140 a une forme parallélépipédique. Le logement 140 est donc délimité par quatre flancs latéraux 146 à 149 qui s'étendent chacun depuis l'entrée 142 jusqu'au fond 144. Ici, l'entrée 142 est rectangulaire et ses plus grands côtés s'étendent horizontalement. Les flancs 146 et 148 correspondent aux plus grandes faces horizontales du parallélépipède. Les flancs 147, 149 correspondent aux plus petites faces verticales du parallélépipède. Les faces 146 à 149 s'étendent toutes parallèlement à l'axe 38.

Les dimensions de l'entrée 142 sont suffisamment grandes pour permettre l'introduction, à la main et sans outil par un être humain, du dispositif 34 à l'intérieur du logement 140. Les dimensions de l'entrée 142, et donc de la section transversale du logement 140, sont également suffisamment petites pour qu'une fois introduit à l'intérieur du logement 140, le dispositif 34 soit en permanence en appui sur au moins deux flancs opposés de ce logement 140. Ainsi, le dispositif 34 est retenu à l'intérieur du logement 140 par frottement sur les flancs 146 à 149. Il n'est donc pas nécessaire de prévoir d'autres moyens de fixation du dispositif 34 à l'intérieur du bloc 120. Ici, le support 50 est directement en appui sur le flanc 146 et la lame 60 est directement en appui sur le flanc opposé 148. De plus, de préférence, les côtés verticaux du support 50 sont également en appui sur, respectivement, les flancs 147 et 149 du logement 140.

Classiquement, la matelassure 42 est obtenue par expansion d'une mousse à l'intérieur d'un moule. Pour obtenir un bon état de surface de la face supérieure 14, la face inférieure du moule correspond à la face supérieure 14 de la matelassure 42 et la face supérieure du moule correspond à la face inférieure 16 de la matelassure 42. La cavité 100 est réalisée lors du moulage de la matelassure 42. À cet effet, la face supérieure du moule comporte une protubérance pour former la cavité 100 dans la face 16. Dans ces conditions, l'état de surface de la face 14 est meilleur que l'état de surface de la face 16 car, lors de l'expansion de la mousse à l'intérieur du moule, les parties inférieures du moule sont remplies de mousse avant les parties supérieures du moule. De plus, les bulles et autres éléments susceptibles de créer des imperfections sur les faces de la matelassure 42 ont tendance à monter lors de l'expansion de la mousse et donc à se concentrer au niveau de la face 16 et du fond 104.

Ici, l'état de surface d'une face de la matelassure 42 ou du bloc 120 est représenté par la rugosité « Ra » mesurée le long d'un profil d'au moins 1 cm de long. Ici, la rugosité Ra est mesurée le long d'un profil de 5 cm de long. Pour cela, par exemple, la matelassure 42 ou le bloc 120 est découpé perpendiculairement et au milieu de la face dont on souhaite mesurer la rugosité de manière à mettre à nu un profil de cette face de 5 cm de long. Ensuite, la ligne droite moyenne de ce profil est construite et les écarts entre le profil mis à nu et cette ligne droite sont relevés. La rugosité Ra est égale à la moyenne des valeurs absolues des écarts relevés. Typiquement, la ligne droite moyenne est la ligne qui minimise les écarts relevés.

La rugosité Ra du fond 104 de la cavité 100 est souvent supérieure ou égale à 1 mm ou 4 mm.

À cause de telles imperfections du fond 104, lorsque le dispositif 34 est logé entre le fond 104 et la face 122 comme décrit dans l'état de l'art (voir par exemple la demande JP2005287795), alors le fond 104 exerce une force d'appui sur la face 60 qui n'est pas uniformément répartie. Ceci modifie le fonctionnement du dispositif 34. En particulier, cela modifie la sensibilité du dispositif 34. En effet, à cause de la répartition aléatoire des imperfections du fond 104, lorsque le même dispositif 34 est logé entre le fond 104 et la face 122, la force d'appui exercée sur la face supérieure 14 qui provoque le franchissement du seuil S₁ ne sera pas nécessairement la même entre différents exemplaires de l'assise 10. Pour limiter cet inconvénient, l'état de surface des flancs 146 et 148 du logement 140 est au moins deux ou quatre fois meilleur que l'état de surface du fond 104. Ainsi, ici, la rugosité Ra des flancs 146 et 148 est inférieure à 0,5 mm et, de préférence, inférieure à 0,25 mm. Dans ce mode de réalisation, l'état de surface des flancs 147 et 149 est identique à l'état de surface des flancs 146 et 148.

La figure 7 représente un procédé de fabrication de l'assise 10.

Initialement, lors d'une étape 160, la matelassure 42 est fabriquée de façon conventionnelle par expansion d'une mousse à l'intérieur d'un moule comme déjà décrit ci-dessus. Le moule utilisé comporte une protubérance pour former en même temps la cavité 100. Un tel procédé de fabrication de la matelassure 42 est par exemple décrit dans la demande JP2005287795.

En parallèle, lors d'une étape 162, le bloc de mousse pour le bloc 120 est fabriqué. Par exemple, ce bloc de mousse est aussi fabriqué par expansion d'une mousse à l'intérieur d'un moule comportant une protubérance pour former en même temps le logement 140. Dans ce cas, cette protubérance est située sur la face inférieure ou sur une face latérale du moule pour que les flancs 146 à 149 du logement 140 présentent un état de surface beaucoup plus lisse que le fond 104 de la cavité 100.

Également en parallèle, lors d'une étape 164, le dispositif 34 est fabriqué.

Ensuite, lors d'une étape 166, le bloc instrumenté 120 est fabriqué en introduisant le dispositif 34 entièrement à l'intérieur du logement 140. Pour cela, typiquement, un opérateur introduit à la main le dispositif 34, à travers l'entrée 142, à l'intérieur du logement 140. Lors de cette étape, les flancs 146 à 148 se déforment élastiquement. Ainsi, ces flancs 146 à 149 sont ensuite en permanence en appui sur le dispositif 34 introduit et le coince donc à l'intérieur du logement 140. Dès lors, le bloc 120 équipé du dispositif 34 peut être facilement manipulé et stocké sans craindre de voir le dispositif 34 sortir du logement 140.

Lors d'une étape 168, la matelassure 42 fabriquée et le bloc 120 fabriqué sont fournis à un atelier d'assemblage.

Lors d'une étape 170, le bloc instrumenté 120 est alors inséré à l'intérieur de la cavité 100, par exemple, à la main par un opérateur. Lors de cette étape, les fils 86 et 87 qui dépassent de l'entrée 142 sont placés à l'intérieur de l'encoche 112. Ainsi, à l'issue de cette étape, le bloc 120 est dans sa position enfoncée et maintenu dans cette position enfoncée par frottement de ses faces latérales contre les parois latérales de la cavité 100. De plus, le dispositif 34 est immobilisé à l'intérieur du bloc 120 par le fait que l'entrée 142 est maintenant obturée par la paroi latérale 107.

Lors d'une étape 172, si nécessaire, l'assise 10 ainsi réalisée peut subir des opérations supplémentaires de finition avant d'être utilisée pour former l'assise du siège 4.

### Variantes du bloc 120 :

Le matériau souple utilisé pour réaliser le bloc 120 peut être différent du matériau souple utilisé pour réaliser la matelassure 42. Par exemple, le matériau souple du bloc 120 peut être plus dur ou, au contraire, plus souple que le matériau souple de la matelassure 42. Le choix de la dureté du matériau souple du bloc 120 permet d'ajuster le seuil de détection du dispositif 34. Par exemple, utiliser une mousse plus dure pour le bloc 120 rend le dispositif 34 moins sensible à la force d'appui, ce qui correspond à une augmentation du seuil S₁ de détection. Par exemple, la dureté du bloc 120 est mesurée comme décrit précédemment dans le cas de la matelassure. Le matériau souple du bloc 120 peut aussi être un isolant phonique.

En variante, le bloc 120 est fixé à l'intérieur de la cavité 100 en utilisant des moyens complémentaires de fixation comme, par exemple, du velcro, des harpons ou des crochets. Ces moyens complémentaires de fixation peuvent être utilisés en plus de la coopération de forme entre les faces latérales 124 à 127 et les parois latérales 106 à 109. Par exemple, ces moyens complémentaires de fixation sont utilisés pour renforcer la fixation du bloc 120 à l'intérieur de la cavité 100.

En variante, le bloc 120 comporte plusieurs logements similaires au logement 140 et reçoit dans chacun de ces logements un dispositif électrique différent. Dans une autre variante, plusieurs dispositifs électriques différents sont reçus à l'intérieur du même logement 140. Ainsi, l'insertion d'un tel bloc en matériau souple à l'intérieur de la cavité 100 permet de fixer, en une seule opération, plusieurs dispositifs électriques à l'intérieur de la même assise.

Le logement 140 n'est pas nécessairement un logement borgne. Dans un autre mode de réalisation, le logement 140 traverse de part en part le bloc 120. Dans ce cas, le logement comporte deux extrémités débouchant, par exemple, chacune dans une face latérale respective du bloc 120. Dans ce cas, de préférence, le logement 140 est rectiligne. En effet, un tel logement rectiligne et débouchant à ses deux extrémités peut facilement être fabriqué dans un bloc en matériau souple. Par exemple, ce logement rectiligne débouchant est fabriqué par découpe au jet d'eau ou à l'aide d'un emporte-pièce.

Le logement 140 n'est pas nécessairement parallélépipédique. Par exemple, le logement 140 peut présenter d'autres formes telles qu'un cylindre à base circulaire ou une forme tronconique à base carrée ou toute autre forme adaptée pour recevoir le dispositif 34 et permettre son fonctionnement.

Dans un autre mode de réalisation, dans la position enfoncée du bloc 120, la face intérieure 122 et le fond 104 sont séparés l'un de l'autre par un espace creux. Toutefois, l'épaisseur de cet espace creux est suffisamment petite pour que lorsqu'un usager s'assoit sur l'assise 10, la face 104 vienne alors en appui sur la face 122.

### Variantes de la matelassure 42 :

La matelassure 42 peut comporter plusieurs cavités 100, à l'intérieur de chacune desquelles est reçu un bloc instrumenté en matériau souple tel que le bloc 120.

En variante, la cavité 100 est creusée dans la face supérieure 14 de l'assise et non pas dans sa face inférieure. Dans ce cas, le bloc 120 est inséré à l'intérieur de la matelassure par le dessus et non pas par le dessous, comme décrit précédemment. Dans une autre variante, la cavité est creusée dans un des bords latéraux de la matelassure 42.

Les parois latérales de la cavité 100 peuvent avoir des formes plus complexes que celles précédemment décrites. Par exemple, les parois latérales de la cavité peuvent comporter un épaulement horizontal ou vertical. La cavité 100 peut avoir d'autres formes qu'une forme parallélépipédique. Par exemple, en variante, la cavité 100 a une forme trapézoïdale ou conique ou tronconique. Des exemples d'autres conformations possibles pour les parois latérales 106 à 109 sont décrites dans la demande JP2005199936. Dans tous ces cas, les formes des faces latérales du bloc 120 sont alors adaptées en conséquence pour correspondre aux formes des parois latérales avec lesquelles elles coopèrent de manière à retenir le bloc 120 dans sa position enfoncée.

L'encoche 112 peut être omise.

### Autres variantes :

D'autres dispositifs de détection de force d'appui, que ceux décrits dans la demande FR1656499, peuvent être utilisés. Par exemple, le dispositif 34 peut être remplacé par le dispositif de détection décrit dans la demande JP2005287795.

Le dispositif électrique n'est pas nécessairement un dispositif de détection d'une force d'appui. D'autres dispositifs électriques peuvent être fixés à l'intérieur de l'assise 10 à l'aide du bloc 120 précédemment décrit. Par exemple, le dispositif 34 peut être remplacé par un actionneur électrique tel qu'un actionneur vibrant pour informer l'usager d'un événement par des vibrations. Le dispositif électrique peut également être une résistance chauffante.

La connexion filaire du dispositif 34 peut être remplacée par une connexion sans fil.

D'autres procédés de fabrication du bloc 120 et de la matelassure 142 sont possibles. Par exemple, le bloc de mousse du bloc 120 est réalisé, sans le logement 140, par moulage comme décrit précédemment. Ensuite, le logement 140 est creusé à l'intérieur de ce bloc de mousse, par exemple, par incision.

L'assise décrite ici peut être utilisée dans n'importe quel domaine technique où une telle assise instrumentée est utile pour réaliser un siège. Ainsi, l'utilisation de cette assise n'est pas limitée à la réalisation de siège de véhicule automobile.

De même, tout ce qui a été décrit ici dans le cas particulier de l'assise d'un siège peut aussi être appliqué dans toutes les matelassures du siège et, en particulier, au dossier de ce siège. En effet, pour certaines applications, par exemple, il est nécessaire de mesurer la pression qu'exerce le dos d'un passager sur le dossier. Ceci est utile pour, par exemple, identifier une posture particulière du passager. Dans ces cas, le dossier du siège est instrumenté. Pour cela, un dispositif électrique est inséré dans la matelassure du dossier de la même façon que ce qui a été décrit dans le cas d'une assise.

### Avantages des modes de réalisation décrits :

Le fait que le logement 140 soit borgne améliore la retenue et la précision du positionnement du dispositif 34 à l'intérieur de l'assise 10.

Le fait que la rugosité des flancs du logement 140 soit beaucoup plus petite que la rugosité du fond 104 permet d'améliorer le fonctionnement du dispositif 34 par rapport au cas où il serait placé comme décrit dans la demande JP2005287795. En effet, comme expliqué précédemment, les flancs latéraux 146 et 148 exercent une pression plus uniforme sur la lame 60 de sorte que le fonctionnement et notamment la sensibilité du dispositif 34 dépend beaucoup moins des imperfections de planéité et/ou d'état de surface du fond 104.

Le fait que la cavité 100 soit aménagée dans la face inférieure 16 de la matelassure 42 améliore le confort de l'usager. En effet, dans ce cas, le dispositif 34 est éloigné de la face supérieure 14. Il ne peut donc pratiquement pas être ressenti par l'usager lorsqu'il s'assoit sur l'assise 10. De plus, une telle cavité 100 dans la face inférieure de la matelassure 42 est facile à fabriquer par moulage de cette matelassure.

Le fait que le dispositif 34 soit en appui en permanence sur au moins deux des flancs latéraux 146 à 149 permet d'empêcher que le dispositif 34 glisse à l'intérieur du logement 140 sous l'effet de son propre poids. Le dispositif 34 est ainsi retenu à l'intérieur du logement 140 sans qu'il soit pour cela nécessaire d'utiliser des moyens complémentaires de fixation du dispositif 34 à l'intérieur du logement 140 tel que de la colle.

La présence de l'encoche 112 réduit l'usure des fils 86, 87 utilisés pour raccorder électriquement le dispositif 34 à l'extérieur de la matelassure 42. En effet, en absence d'une telle encoche, le rayon de courbure des fils 86, 87 au niveau de l'entrée 142 est plus élevé ce qui favorise leur usure au fur et à mesure des déformations de la matelassure 42.

## Revendications

1. Siège comportant :
- une matelassure (42) en matériau souple comportant une cavité borgne (100), cette cavité borgne comportant :
• une ouverture (102) débouchant sur un côté de la matelassure,
• un fond (104) situé du côté opposé à l'ouverture, et
• des parois latérales (106-109) s'étendant depuis la périphérie du fond jusqu'à la périphérie de l'ouverture,
- un bloc instrumenté (120) en matériau souple reçu à l'intérieur de la cavité, ce bloc instrumenté comportant :
• une face intérieure (122) tournée vers le fond de la cavité,
• une face extérieure (130) située du côté opposé à la face intérieure et directement exposée à l'extérieur de la matelassure,
• des faces latérales (124-127) qui s'étendent depuis la périphérie de la face intérieure jusqu'à la périphérie de la face extérieure, ces faces latérales étant conformées pour maintenir le bloc instrumenté coincé à l'intérieur de la cavité par coopération de forme avec les parois latérales de la cavité, et
• un dispositif électrique (34),
**caractérisé en ce que** :
- le bloc instrumenté (120) comporte un logement oblong (140), ce logement oblong comportant des flancs latéraux (146-149) qui s'étendent principalement vers l'intérieur du bloc instrumenté depuis une entrée (142) située sur l'une des faces latérales (124-127) du bloc instrumenté, cette entrée étant apte à permettre l'introduction du dispositif électrique (34) à l'intérieur du logement, et
- le dispositif électrique (34) est entièrement reçu à l'intérieur de ce logement.

2. Siège selon la revendication 1, dans lequel le logement oblong (140) est borgne.

3. Siège selon l'une quelconque des revendications précédentes, dans lequel :
- le dispositif électrique (34) est en appui en permanence sur deux flancs latéraux (146-149) en vis-à-vis du logement,
- le dispositif électrique (34) est apte à détecter une force d'appui en réponse à une déformation des flancs latéraux (146-149) du logement sur lesquels il est en appui ou à générer une déformation de ces flancs latéraux en réponse à une commande, et
- la rugosité Ra des flancs latéraux (146-149) du logement sur lesquels le dispositif électrique est en appui est au moins deux fois plus petite que la rugosité Ra du fond (104) de la cavité.

4. Siège selon la revendication 3, dans lequel la rugosité Ra des flancs latéraux (146-149) sur lesquels le dispositif électrique est en appui est inférieur à 0,5 mm.

5. Siège selon l'une quelconque des revendications précédentes, dans lequel la matelassure (42) comporte :
- une face supérieure (14) sur laquelle repose le postérieur de l'usager lorsque celui-ci est assis, cette face supérieure s'étendant principalement parallèlement à un plan appelé « plan de l'assise », et
- une face inférieure (16) située du côté opposé à la face supérieure.

6. Siège selon la revendication 5, dans lequel la cavité (100) est aménagée dans la face inférieure de la matelassure.

7. Siège selon la revendication 5 ou 6, dans lequel :
- deux des flancs latéraux (146, 148) du logement sont des flancs supérieure et inférieure qui s'étendent chacun parallèlement au plan de l'assise,
- le dispositif électrique (34) est en appui sur les flancs supérieure et inférieur, et
- le dispositif électrique (34) est apte à détecter une force d'appui exercée sur la face supérieure (14) de la matelassure dans une direction d'enfoncement perpendiculaire au plan de l'assise.

8. Siège selon l'une quelconque des revendications précédentes, dans lequel le dispositif électrique (34) est coincé entre au moins deux flancs latéraux (146-149) en vis-à-vis du logement.

9. Siège selon l'une quelconque des revendications précédentes, dans lequel la paroi latérale (107) de la cavité en vis-à-vis de l'entrée (142) du logement oblong et/ou la face latérale (125) du bloc instrumenté dans laquelle est située l'entrée (142) du logement oblong comporte une encoche (112) qui relie cette entrée au côté de la matelassure comportant l'ouverture (102) de la cavité borgne (100).

10. Procédé de fabrication d'une siège conforme à l'une quelconque des revendications 1 à 9, ce procédé comportant :
a) la fourniture (168) d'une matelassure en matériau souple comportant une cavité borgne, cette cavité borgne comportant :
• une ouverture débouchant sur un côté de la matelassure,
• un fond situé du côté opposé à l'ouverture, et
• des parois latérales s'étendant depuis la périphérie du fond jusqu'à la périphérie de l'ouverture,
b) la fourniture (168) d'un bloc instrumenté apte à être reçu à l'intérieur de la cavité, ce bloc instrumenté comportant :
• une face intérieure tournée vers le fond de la cavité,
• une face extérieure située du côté opposé à la face intérieure et directement exposée à l'extérieur de la matelassure,
• des faces latérales qui s'étendent depuis la périphérie de la face intérieure jusqu'à la périphérie de la face extérieure, ces faces latérales étant conformées pour maintenir le bloc instrumenté coincé à l'intérieur de la cavité par coopération de forme avec les parois latérales de la cavité, et
• un dispositif électrique,
c) l'insertion (170) du bloc instrumenté à l'intérieur de la cavité,
**caractérisée en ce que** :
- lors de l'étape b), le bloc instrumenté fourni (168) comporte un logement oblong, ce logement oblong comportant des flancs latéraux qui s'étendent principalement vers l'intérieur du bloc instrumenté depuis une entrée située sur l'une des faces latérales du bloc instrumenté, cette entrée étant apte à permettre l'introduction du dispositif électrique à l'intérieur du logement, et
- avant l'étape b), le procédé comporte l'introduction (166), à travers l'entrée du logement oblong, du dispositif électrique entièrement à l'intérieur de ce logement.

## Patentansprüche

1. Sitz, der Folgendes umfasst:
- eine Polsterung (42) aus einem flexiblen Material, die einen nicht durchgehenden Hohlraum (100) umfasst, wobei dieser nicht durchgehende Hohlraum Folgendes umfasst:
• eine Öffnung (102), die auf einer Seite der Polsterung mündet,
• einen Boden (104), der sich gegenüber der Öffnung befindet, und
• Seitenwände (106-109), die sich von dem Umfang des Bodens bis zu dem Umfang der Öffnung erstrecken,
- einen Instrumentenblock (120) aus einem flexiblen Material, der im Inneren des Hohlraums aufgenommen ist, wobei dieser Instrumentenblock Folgendes umfasst:
• eine Innenfläche (122), die zu dem Boden des Hohlraums zeigt,
• eine Außenfläche (130), die sich gegenüber der Innenfläche befindet und direkt an der Außenseite der Polsterung freiliegt,
• Seitenflächen (124-127), die sich von dem Umfang der Innenfläche bis zu dem Umfang der Außenfläche erstrecken, wobei diese Seitenflächen dazu angepasst sind, den Instrumentenblock durch Formschluss mit den Seitenwänden des Hohlraums im Inneren des Hohlraums eingeklemmt zu halten, und
• eine elektrische Vorrichtung (34),
**dadurch gekennzeichnet, dass**:
- der Instrumentenblock (120) eine längliche Aufnahme (140) umfasst, wobei diese längliche Aufnahme Seitenflanken (146-149) umfasst, die sich von einem Eingang (142), der sich an einer der Seitenflächen (124-127) des Instrumentenblocks befindet, im Wesentlichen zum Inneren des Instrumentenblocks erstrecken, wobei dieser Eingang dazu fähig ist, das Einführen der elektrischen Vorrichtung (34) in das Innere der Aufnahme zu gestatten, und
- die elektrische Vorrichtung (34) komplett im Inneren dieser Aufnahme aufgenommen ist.

2. Sitz nach Anspruch 1, wobei die längliche Aufnahme (140) nicht durchgehend ist.

3. Sitz nach einem der vorhergehenden Ansprüche, wobei:
- die elektrische Vorrichtung (34) dauerhaft an zwei sich gegenüberliegenden Seitenflanken (146-149) der Aufnahme anliegt,
- die elektrische Vorrichtung (34) dazu fähig ist, als Reaktion auf eine Verformung der Seitenflanken (146-149) der Aufnahme, an denen sie anliegt, eine Auflagekraft zu erkennen oder als Reaktion auf einen Befehl eine Verformung dieser Seitenflanken zu erzeugen, und
- die Rauheit Ra der Seitenflanken (146-149) der Aufnahme, an denen die elektrische Vorrichtung anliegt, höchstens halb so groß wie die Rauheit Ra des Bodens (104) des Hohlraums ist.

4. Sitz nach Anspruch 3, wobei die Rauheit Ra der Seitenflanken (146-149), an denen die elektrische Vorrichtung anliegt, kleiner als 0,5 mm ist.

5. Sitz nach einem der vorhergehenden Ansprüche, wobei die Polsterung (42) Folgendes umfasst:
- eine obere Fläche (14), auf der das Gesäß des Nutzers ruht, wenn dieser sitzt, wobei sich diese obere Fläche im Wesentlichen parallel zu einer als "Sitzflächenebene" bezeichneten Ebene erstreckt, und
- eine untere Fläche (16), die sich gegenüber der oberen Fläche befindet.

6. Sitz nach Anspruch 5, wobei der Hohlraum (100) in der unteren Fläche der Polsterung eingebracht ist.

7. Sitz nach Anspruch 5 oder 6, wobei:
- zwei der Seitenflanken (146, 148) der Aufnahme eine obere und eine untere Flanke sind, die sich jeweils parallel zu der Sitzflächenebene erstrecken,
- die elektrische Vorrichtung (34) an der oberen und der unteren Flanke anliegt und
- die elektrische Vorrichtung (34) dazu fähig ist, eine Auflagekraft zu erkennen, die in einer zu der Sitzflächenebene senkrechten Eindrückrichtung auf die obere Fläche (14) der Polsterung ausgeübt wird.

8. Sitz nach einem der vorhergehenden Ansprüche, wobei die elektrische Vorrichtung (34) zwischen mindestens zwei sich gegenüberliegenden Seitenflanken (146-149) der Aufnahme eingeklemmt ist.

9. Sitz nach einem der vorhergehenden Ansprüche, wobei die Seitenwand (107) des Hohlraums gegenüber dem Eingang (142) der länglichen Aufnahme und/oder die Seitenfläche (125) des Instrumentenblocks, in der sich der Eingang (142) der länglichen Aufnahme befindet, eine Kerbe (112) umfasst, die diesen Eingang mit der Seite der Polsterung, die die Öffnung (102) des nicht durchgehenden Hohlraums (100) umfasst, verbindet.

10. Verfahren zur Fertigung eines Sitzes, der einem der Ansprüche 1 bis 9 entspricht, wobei dieses Verfahren Folgendes umfasst:
a) Bereitstellen (168) einer Polsterung aus einem flexiblen Material, die einen nicht durchgehenden Hohlraum umfasst, wobei dieser nicht durchgehende Hohlraum Folgendes umfasst:
• eine Öffnung, die auf einer Seite der Polsterung mündet,
• einen Boden, der sich gegenüber der Öffnung befindet, und
• Seitenwände, die sich von dem Umfang des Bodens bis zu dem Umfang der Öffnung erstrecken,
b) Bereitstellen (168) eines Instrumentenblocks, der dazu fähig ist, im Inneren des Hohlraums aufgenommen zu sein, wobei dieser Instrumentenblock Folgendes umfasst:
• eine Innenfläche, die zu dem Boden des Hohlraums zeigt,
• eine Außenfläche, die sich gegenüber der Innenfläche befindet und direkt an der Außenseite der Polsterung freiliegt,
• Seitenflächen, die sich von dem Umfang der Innenfläche bis zu dem Umfang der Außenfläche erstrecken, wobei diese Seitenflächen dazu angepasst sind, den Instrumentenblock durch Formschluss mit den Seitenwänden des Hohlraums im Inneren des Hohlraums eingeklemmt zu halten, und
• eine elektrische Vorrichtung,
c) Einlegen (170) des Instrumentenblocks in das Innere des Hohlraums,
**dadurch gekennzeichnet, dass**:
- während des Schritts b) der bereitgestellte Instrumentenblock (168) eine längliche Aufnahme umfasst, wobei diese längliche Aufnahme Seitenflanken umfasst, die sich von einem Eingang, der sich an einer der Seitenflächen des Instrumentenblocks befindet, im Wesentlichen zum Inneren des Instrumentenblocks erstrecken, wobei dieser Eingang dazu fähig ist, das Einführen der elektrischen Vorrichtung in das Innere der Aufnahme zu gestatten, und
- vor dem Schritt b) das Verfahren das Einführen (166), durch den Eingang der länglichen Aufnahme, der elektrischen Vorrichtung komplett in das Innere dieser Aufnahme umfasst.

## Claims

1. Seat comprising:
- a cushioning (42) made from a flexible material comprising a blind cavity (100), this blind cavity comprising:
• an opening (102) opening out on one side of the cushioning,
• a base (104) located on the side opposite the opening, and
• lateral walls (106-109) extending from the periphery of the base as far as the periphery of the opening,
- an instrumented unit (120) made from flexible material received inside the cavity, this instrumented unit comprising:
• an interior face (122) turned toward the base of the cavity,
• an exterior face (130) located on the side opposite the interior face and directly exposed to the exterior of the cushioning,
• lateral faces (124-127) that extend from the periphery of the interior face as far as the periphery of the exterior face, these lateral faces being shaped such as to hold the instrumented unit wedged inside the cavity by interaction of form with the lateral walls of the cavity, and
• an electrical device (34),
**characterized in that**:
- the instrumented unit (120) comprises an oblong housing (140), this oblong housing comprising lateral flanks (146-149) that extend principally toward the interior of the instrumented unit from an inlet (142) located on one of the lateral faces (124-127) of the instrumented unit, this inlet being capable of allowing the insertion of the electrical device (34) inside the housing, and
- the electrical device (34) is entirely received inside this housing.

2. Seat according to Claim 1, wherein the oblong housing (140) is blind.

3. Seat according to either of the preceding claims, wherein:
- the electrical device (34) bears permanently on two facing lateral flanks (146-149) of the housing,
- the electrical device (34) is capable of detecting a bearing force in response to a deformation of the lateral flanks (146-149) of the housing on which it bears or of generating a deformation of these lateral flanks in response to a command, and
- the roughness Ra of the lateral flanks (146-149) of the housing on which the electrical device bears is at least twice as small as the roughness Ra of the base (104) of the cavity.

4. Seat according to Claim 3, wherein the roughness Ra of the lateral flanks (146-149) on which the electrical device bears is less than 0.5 mm.

5. Seat according to any one of the preceding claims, wherein the cushioning (42) comprises:
- an upper face (14) on which the user's buttocks rest when he is seated, this upper face extending principally parallel to a plane called the "seating pad plane", and
- a lower face (16) located on the side opposite the upper face.

6. Seat according to Claim 5, wherein the cavity (100) is provided in the lower face of the cushioning.

7. Seat according to Claim 5 or 6, wherein:
- two of the lateral flanks (146, 148) of the housing are upper and lower flanks that each extend parallel to the seating pad plane,
- the electrical device (34) bears on the upper and lower flanks, and
- the electrical device (34) is capable of detecting a bearing force exerted on the upper face (14) of the cushioning in a direction of depression perpendicular to the seating pad plane.

8. Seat according to any one of the preceding claims, wherein the electrical device (34) is wedged between at least two facing lateral flanks (146-149) of the housing.

9. Seat according to any one of the preceding claims, wherein the lateral wall (107) of the cavity facing the inlet (142) of the oblong housing and/or the lateral face (125) of the instrumented unit in which the inlet (142) of the oblong housing is located comprises a notch (112) that connects this inlet to the side of the cushioning comprising the opening (102) of the blind cavity (100).

10. Method for manufacturing a seat according to any one of Claims 1 to 9, this method comprising:
a) the provision (168) of a cushioning made from flexible material comprising a blind cavity, this blind cavity comprising:
• an opening opening out on one side of the cushioning,
• a base located on the side opposite the opening, and
• lateral walls extending from the periphery of the base as far as the periphery of the opening,
b) the provision (168) of an instrumented unit capable of being received inside the cavity, this instrumented unit comprising:
• an interior face turned toward the base of the cavity,
• an exterior face located on the side opposite the interior face and directly exposed to the exterior of the cushioning,
• lateral faces that extend from the periphery of the interior face as far as the periphery of the exterior face, these lateral faces being shaped such as to hold the instrumented unit wedged inside the cavity by interaction of form with the lateral walls of the cavity, and
• an electrical device,
c) the insertion (170) of the instrumented unit inside the cavity,
**characterized in that**:
- in step b), the provided instrumented unit (168) comprises an oblong housing, this oblong housing comprising lateral flanks that extend principally toward the interior of the instrumented unit from an inlet located on one of the lateral faces of the instrumented unit, this inlet being capable of allowing the insertion of the electrical device inside the housing, and
- prior to step b), the method comprises the insertion (166), through the inlet of the oblong housing, of the electrical device entirely inside this housing.
